(19) **Europäisches Patentamt / European Patent Office / Office européen des brevets**

(11) **EP 1 384 566 B1**

(12) # EUROPEAN PATENT SPECIFICATION

(45) Date of publication and mention
of the grant of the patent:
**11.04.2012 Bulletin 2012/15**

(51) Int Cl.:
**B29C 70/48** *(2006.01)*   **B29C 45/77** *(2006.01)*

(21) Application number: **03076557.2**

(22) Date of filing: **22.05.2003**

(54) **Liquid molding system comprising a liquid molding pressure control apparatus and method of using the same**

Vorrichtung zur Drucksteuerung beim Formverfahren mit einer Flüssigkeit und Verwendung der selben

Appareil et méthode de contrôle de la pression lors du moulage d'un matériau liquide

(84) Designated Contracting States:
**DE FR GB**

(30) Priority: **24.07.2002 US 201839**

(43) Date of publication of application:
**28.01.2004 Bulletin 2004/05**

(73) Proprietor: **The Boeing Company
Seattle, WA 98124-2207 (US)**

(72) Inventors:
• **Miller, Scott A.
Des Moines, WA 98198 (US)**
• **Cundiff, Thomas R.
Edgewood, WA 98372 (US)**

(74) Representative: **Land, Addick Adrianus Gosling et al
Arnold & Siedsma
Sweelinckplein 1
2517 GK Den Haag (NL)**

(56) References cited:
**FR-A- 2 750 071    US-A- 5 316 707
US-A- 5 518 385    US-A- 5 518 388
US-A- 5 786 999**

• **RUBIN I.: "Injection Molding; Theory and Practice" 1972 , WILEY-INTERSCIENCE (SPE MONOGRAPHS SERIES) , NEW-YORK XP002260290 * page 518 - page 521 ***

**Description**

FIELD OF THE INVENTION

The present invention relates generally to liquid molding processes and more particularly to Resin Transfer Molding (RTM).

BACKGROUND OF THE INVENTION

Resin Transfer Molding (RTM) is a well-known manufacturing process that uses a closed mold to produce cured fiber-reinforced composite parts that are relatively light weight but of high strength. Examples of consumer items that might be produced with RTM processes include automobile parts and aircraft components.

A typical RTM process is as follows. First, a dry fabric preform (e.g., fiberglass, graphite, etc.) is placed into a mold cavity defined by a mold. The mold cavity has the shape of the desired part. Next, the mold is closed and a vacuum is drawn or created in the mold cavity. The dry fabric perform takes the shape defined by the mold cavity. A resin pump or injector may then be used to inject resin under pressure into the mold cavity, and the resin impregnates or wets the preform.

After the resin fill cycle has been completed, the cure cycle begins. During the cure cycle, the mold is exposed to an elevated temperature, and the resin within the mold cavity polymerizes to become rigid plastic. After a predetermined curing cycle has elapsed, a finished part may then be removed from the mold.

Porosity is common RTM problem that is associated with the inability to remove air or volatiles out of the matrix (resin). Porosity may cause surface anomalies and/or inconsistent part thicknesses, which in turn lead to the rejection of many parts.

Multiple techniques have been used to deal with porosity. Some of the more common techniques include degassing the resin, extended interim temperature soaks, higher injection temperatures, and increased pressures. These common techniques, however, often lead to increases in the processing time and/or costs associated with the RTM process. For example, extended interim temperature soaks and degassing sequences both increase the time needed for the RTM process.

High pressure injectors (e.g., pail unloaders) are also used to deal with porosity. High pressure injectors allow for application of relatively high mold pressures while using traditional inputs (e.g., 6,89 bar (100 pounds per square inch (PSI) of shop air). Typically, resin is injected into the mold cavity at around 2,07 bar (30 PSI). A high pressure injector may then be used to elevate the pressure within the mold cavity to, for example, 20,68 bar (300 PSI). The higher pressure may drive air or volatiles back into the matrix or substrate resin.

Although high pressure injectors are functionally effective at reducing the extent of porosity in the RTM processed parts, high pressure injectors are not without their drawbacks. First, high pressure injectors are relatively costly to purchase and maintain. In addition, high pressure injectors are not compatible with multi-part resin systems but must be used with one-part or premixed resins.

Porosity notwithstanding, high costs are another problem associated with RTM processes. Typical RTM production facilities often utilize multiple injection units or injectors to meet production rate requirements. For example, a manufacture may purchase additional injection units to meet increasing production rates or new program requirements. However, injection equipment is expensive to purchase and maintain especially in the case where multiple injection units are required.

Additionally, high pressure injectors must often be used for extended periods of time to maintain elevated pressures within a mold cavity while the resin cures within the mold cavity. Such extended use causes a lot of wear and tear on the relatively expensive injectors.

US-A-5 786 999 discloses a controller for controlling the injection stage of an injection molding apparatus that controls the velocity of a ram in this stage.

US-A-5 316 707 discloses a control system for an injection molding apparatus controlling an injection cycle in which the fluid molding material is injected into the molding dye in a particular and predetermined manner.

US-A-5 518 385 discloses an apparatus and method for resin transfer molding in which a reinforcing material is degassed in a substantially uncompressed condition prior to being impregnated with resin.

Document FR 2750071 A discloses a liquid moldim system comprising

- a mold defining a mold cavity;
- a starting material supply apparatus; and
- a liquid molding pressure control apparatus comprising:

   * a housing; and

* a piston assembly movably disposed within the housing;
* the liquid molding pressure control apparatus being usable to substantially maintain pressure within a mold cavity and to increase the pressure within the mold cavity.

This document also discloses a method for use during a liquid molding process.

It is an object of the present invention to improve upon the available liquid molding pressure control apparatus. This object is achieved by a liquid molding system as claimed in claim 1 and a method as claimed in claim 14.

SUMMARY OF THE INVENTION

Accordingly, a need remains for a device and method that is capable of increasing the pressure within a mold cavity while using relatively low pressure inputs. Ideally, the device and method should be capable of being used with one-part or multi-part resin systems. Additionally, the device and method should also be capable of maintaining the pressure within a mold cavity after an injector has provided the mold cavity with a resin, thus allowing the injector to be removed and used elsewhere.

In one form, the present invention provides a liquid molding system according to claim 1.

In one embodiment, the starting material supply apparatus comprises a pressure pot, and the liquid molding pressure control apparatus is used to increase the pressure within the mold cavity. In another embodiment, the starting material supply apparatus comprises a pail unloader, and the liquid molding pressure control apparatus is used to substantially maintain pressure within the mold cavity so that the pail unloader may be removed from the liquid molding system and used elsewhere.

In yet another form, the present invention provides a method for use during a liquid molding process according to claim 14..

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

BRIEF DESCRIPTION OF THE DRAWINGS

The present invention will be more fully understood from the detailed description and the accompanying drawings, wherein:

Figure 1 is a perspective view of a liquid molding pressure control apparatus;

Figure 2 is another perspective view of the liquid molding pressure control apparatus shown in Figure 1;

Figure 3 is a cross-sectional side view of the liquid molding pressure control apparatus shown in Figure 1;

Figure 4 is a cross-sectional side view of a piston assembly illustrating the hydraulic ram principle;

Figure 5 is a schematic diagram illustrating a system in which the liquid molding pressure control apparatus is used to increase pressure within a mold cavity according to one embodiment of the present invention;

Figure 6 is a schematic diagram illustrating a system in which the liquid molding pressure control apparatus is used to maintain pressure within a mold cavity according to another embodiment of the present invention; and

DETAILED DESCRIPTION OF THE PREFERRED EMBODIMENTS

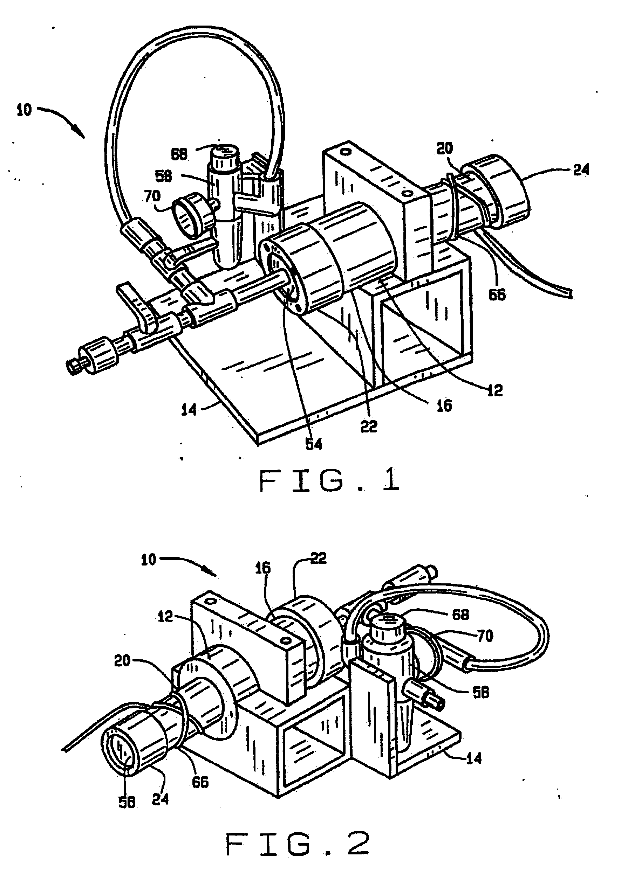

Figures 1 and 2 are perspective views of a liquid molding pressure control apparatus generally indicated by reference number 10, according to one preferred embodiment of the present invention. Briefly, the liquid molding control apparatus 10 may be used to boost or increase the pressure within a mold cavity while using traditional inputs (e.g., ordinary shop air at 100 PSI) during a Resin Transfer Molding (RTM) process. Alternatively, the liquid molding control apparatus 10 may be used to substantially maintain or stabilize the pressure within a resin-filled mold cavity during the resin cure cycle.

As shown, the liquid molding pressure control apparatus 10 includes a housing 12. Preferably, the housing 12 and one or more of the other components comprising the liquid molding pressure control apparatus 10 is supported by a support structure 14.

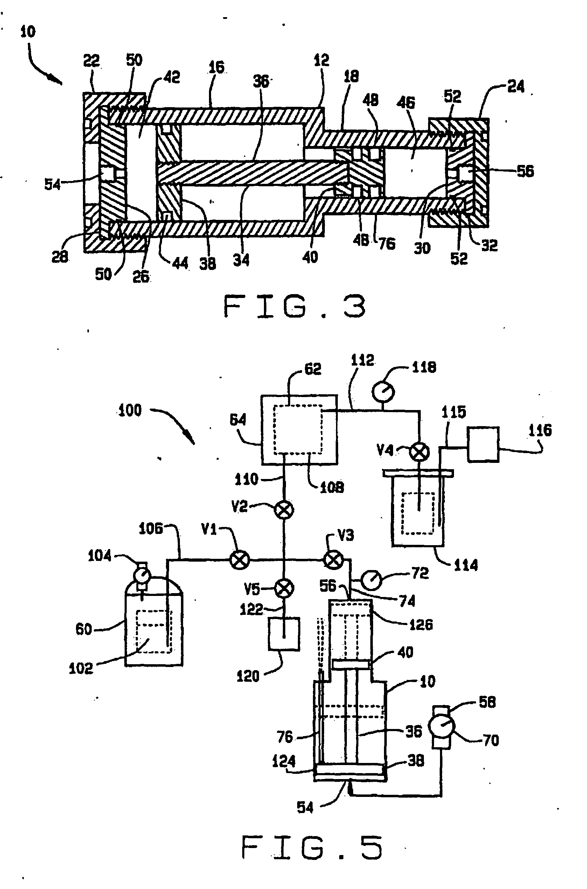

The housing 12 preferably includes a first housing portion 16 and a second housing portion 18. The first and second housing portions 16 and 18 may be substantially cylindrical although other shapes are also possible. In Figures 1 and 2, the second housing portion 18 is disposed under a heater blanket 20 and accordingly is not shown in Figure 2. The second housing portion 18, however, is shown in Figure 3. Figure 3 is a cross-sectional side view of the liquid molding pressure control apparatus 10.

Referring now to Figures 1 through 3, an air cap 22 is disposed at an end of the housing 12, and a resin cap 24 is disposed at the other end of the housing 12. Preferably, the air and resin caps 22 and 24 are threadedly engaged to the respective ends of the housing 12, as is shown in Figure 3. Alternatively, other methods may be employed to engage the air and resin caps 22 and 24 with the housing 12 as would be obvious to those having ordinary skill in the art after having become familiar with the teachings of the present invention.

Still referring to Figure 3, the liquid molding pressure control apparatus 10 may further comprise an air plug 26 disposed within the first housing portion 16 adjacent the air cap 22. Preferably, a portion 28 of the air plug 26 is disposed between portions of the first housing portion 16 and the air cap 22.

The liquid molding pressure control apparatus 10 may further comprise a resin plug 30 disposed within the second housing portion 18 adjacent the resin cap 24. Preferably, a portion 32 of the resin plug 30 is disposed between portions of the second housing portion 18 and the resin cap 24.

The pressure control apparatus 10 further includes a piston assembly 34 movably disposed within the housing 12. The piston assembly 34 includes a shaft 36, a first or air piston 38 engaged to one end of the shaft 36, and a second or resin piston 40 engaged to the other end of the shaft 36. Preferably, the air and resin pistons 38 and 40 are threadedly engaged to the shaft 36. However, other types of connections may be used to engage the air and resin pistons 38 and 40 with the shaft 36 as would be obvious to those having ordinary skill in the art after having become familiar with the teachings of the present invention.

The first and second housing portions 16 and 18, respectively, are substantially tubular. An air chamber or cavity 42 is defined by a portion of the first housing portion 16, the air plug 26, and the air piston 38. A resin chamber or cavity 46 is defined by the a portion of the second housing portion 18, the resin plug 30, and the resin piston 40. Because the piston assembly 34 is movable within the housing 12, the size of the air and resin chambers 42 and 46 are dependent at least in part on the positions of the air and resin pistons 26 and 30 within the housing 12. Accordingly, the size of the air and resin chambers 42 and 46 may vary during the use of the liquid molding control apparatus 10.

To assist with the fluidic sealing of the air chamber 42, the air piston 38 may define at least one annular groove that is disposed circumferentially around the air piston 38 and that is sized to receive an o-ring 44 therein. Preferably, the o-ring 44 comprises a Polypack o-ring, although other types of fluidic sealing members may be used.

The resin piston 40 may define at least one annular groove that is disposed circumferentially around the resin piston 40 and that is sized to receive an o-ring 48 therein. Accordingly, the o-ring 48, when disposed within the groove, is disposed circumferentially around the resin piston 40 and thus assists the resin plug 30 with the fluidic sealing of the resin chamber 46. Preferably, the o-ring 48 comprises a Polypack o-ring, although other types of fluidic sealing members may be used.

Additionally, the air plug 26 may define at least one groove that is sized to receive an o-ring 50 therein, and the resin plug 30 may define at least one groove that is sized to receive an o-ring 52 therein. When disposed within the respective grooves, the o-rings 50 and 52 are disposed circumferentially around the air plug 26 and resin plug 30, respectively. Accordingly, the o-rings 50 and 52 assist with the fluidic sealing of the air and resin chambers 42 and 46, respectively. Preferably, the o-rings 50 and 52 comprise silicone o-rings, although other types of fluidic sealing members may be used.

The liquid molding pressure control apparatus 10 further includes an air inlet 54 (Figures 1, 3, and 5) that is in fluid communication with the air chamber 42. The liquid molding pressure control apparatus 10 also includes a resin inlet/outlet 56 (Figures 2, 3, and 5) that is in fluid communication with the resin chamber 46. As best shown in Figure 5, the air inlet 54 may be used to input or apply a pressurized fluid (e.g., pressurized air) from a traditional air input and regulator 58. The resin inlet/outlet 56 may be used to input a starting material (e.g., one-part resin, two-part resin, other multi-part resin, etc.) from a pressure pot 60 into the resin chamber 46 and to discharge the starting material from the resin chamber 46 at an elevated pressure. After exiting the resin chamber 46 through the resin inlet/outlet 56, the starting material may ultimately be injected at the elevated pressure into a mold cavity 62 of the mold or tool 64.

Referring back to Figures 1 and 2, a heating apparatus for applying heat to the resin within the resin chamber 46 will now be discussed. Preferably, the heating apparatus comprises a heater blanket 20 disposed substantially around the second housing portion 18. The heater blanket 20 may be engaged to the second housing portion 18 with an elastic or bungee cord 66, although other methods of engagement are also possible.

Application of heat to the resin within the resin chamber 46 allows the resin to remain at an appropriate viscosity. That is, the heater blanket 20 allows the resin viscosity to be maintained at a low enough level such that the resin may be readily discharged or ejected out of the resin chamber 46 through the resin inlet/outlet 56 by the liquid molding pressure control apparatus 10. In addition, a particular embodiment may include the use of a multi-part resin system for which heat must be applied to prevent the resin from setting up within the resin chamber 46.

Still referring to Figures 1 and 2, the air regulator 58 preferably allows a user to control the pressure within the air chamber 42. For example, the air regulator 58 may include a rotatable knob or valve 68 and a gauge 70. By viewing the gauge 70 and rotating the knob 68 accordingly, the user can thus control the pressure of the air chamber 42. A resin pressure gauge or monitor 72 may also be provided that displays the pressure at which the resin is being discharged out of the resin chamber 46, as shown in Figure 5. Accordingly, the user may control the pressure at which the resin exits the resin chamber 46 by adjusting the pressure of the air chamber 42 with the air regulator 58.

In addition, a resin inlet/outlet conduit or line 74 (e.g., copper tubing, nylon tubing, etc.) may be engaged with the resin cap 24 such that the resin inlet/outlet conduit 74 is in fluid communication with the resin inlet/outlet 56. The resin inlet/outlet conduit 74 provides a means for facilitating the introduction or resin into and the removal of resin out of the resin chamber 46.

To allow the user to readily determine the positions of the air and resin pistons 38 and 40 within the housing 12, a depth gauge 76 may be provided. In the initial or ready-to-operate state of the liquid molding pressure control apparatus 10, the air and resin pistons 38 and 40 are preferably in their respective retracted positions (i.e., position 124 shown in Figure 5).

Initiation of the pressurized air into the air chamber 42 via the air inlet 54 causes the air piston 38 to move in a direction away from the air inlet 54. Because the resin piston 40 is coupled to the air piston 38 via the shaft 36, the resin piston 40 moves along with air piston 38 in a direction towards the resin outlet 56. When the resin piston 40 is moving towards the resin outlet 56, the resin piston 40 forces resin out of the resin chamber 46 and into the resin inlet/outlet conduit 74 via resin inlet/outlet 56. The resin piston 40 preferably has a smaller cross-sectional area than the air piston 38 so that the resin piston 40 may force the resin out of the resin chamber 46 at a pressure greater than the pressure of the pressurized air received within the air chamber 42.

The elevated pressure at which the resin exits the resin chamber 46 will depend at least in part on the relative cross-sectional areas of the air and resin pistons 38 and 40. By way of example only, the ratio of the cross-sectional area of the air piston 38 to the cross-sectional area of the resin piston 40 is preferably about four-to-one (4-1). This allows the resin to be discharged from the housing 12 at a pressure of about 27,98 bar (400 PSI) when the pressurized air is about 6.89 bar (100 PSI)

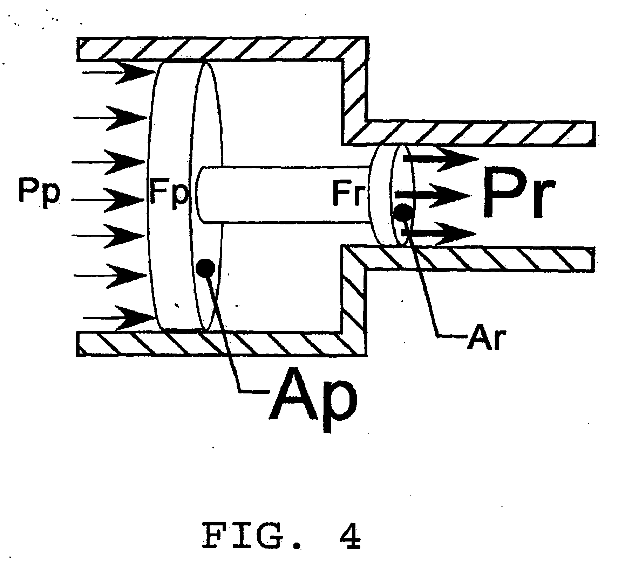

Figure 4 is a cross-sectional side view of an exemplary piston assembly and is used to illustrate the hydraulic ram principle. The hydraulic ram equation is as follows:

$$F = P^{*}A$$

wherein F is the force, P is the pressure, and A is the cross-sectional area of the piston. With reference to Figure 4, the following analysis can be derived:

$$Pp = Fp/Ap$$

$$Pr = Fr/Ar$$

wherein Pp is the plunger pressure, Pr is the ram pressure, Fp is the plunger force, Ap is the cross-sectional area of the plunger, Fr is the ram force, and Ar is the cross-sectional area of the ram.

Preferably, the piston assembly 34 of the liquid molding pressure control apparatus 10 (Figure 3) is relatively rigid. Accordingly, the air piston 38 force (Fp) will be substantially equal to the resin piston 40 force (Fr). By way of example only, the air piston 38 may have a diameter of about 7.62 cm (3.0 inches) such that the air piston's 38 cross-sectional area is about 45.6 cm² (7.065 in² ) , and the resin piston 40 may have a diameter of about 3.81 cm (1.5 inches) such that the resin piston's 40 cross-sectional area is about 11.40 cm² (1.766 in²) . Using these dimensions, the above equations, and the nomenclature from Figure 4, it can thus be shown that a ram pressure of 27.98 bar (400 PSI) can be achieved by using a typical input of shop air at 6.89 bar (100 PSI).

$$\langle Ap = 45.60\ cm^2\ (\ diameter = 7.62\ cm\ (3\ in))\ (7.065\ in^2)\rangle$$

$$\langle Ar = 11.40\ cm^2\ (diameter\ 3.81\ cm\ (1.5\ in)\ (1.766\ in^2)\rangle$$

$$Pp = \langle 6.09\ bar \rangle (100\ PSI)$$

$$F_p = P_p \cdot A_p = \cancel{100\ PSI \cdot 7.06}$$

$$F_p = 3.142\ N\ (706.5\ lbs)$$

$$F_r = F_p = 3.142\ N\ (706.5\ lbs)$$

$$P_r = F_r / A_r$$

$$P_r = 27.50\ bars\ (400\ PSI)$$

Accordingly, the liquid molding pressure control apparatus 10 of the preceding example can provide a ram pressure of 27.98 bar (400 PSI) while using a traditional shop input of 6.89 bar (100 PSI). Depending on the desired target pressure (Pr) for the RTM process, the liquid molding pressure control apparatus 10 can be designed and built with other dimensions appropriate for achieving the desired target pressure (Pr).

Figure 5 is a schematic diagram of a liquid molding system 100 in which the liquid molding pressure control apparatus 10 may be used. As shown, the system 100 includes the liquid molding pressure control apparatus 10 shown in an initial or retracted position 124 (an extended position 126 is shown in broken lines), the air regulator 58, the resin inlet/outlet conduit 74, and resin pressure gauge 72. In addition, the system 100 preferably includes a pressure pot 60 containing a starting material (e.g., resin 102) therein and a pressurized fluid source or input 104 (e.g., shop air) engaged with the pressure pot 60. A conduit 106 is provided that allows for the resin 102 to be removed from the pressure pot 60.

The system 100 further includes a mold or tool 64 that defines a mold cavity 62. The mold cavity 62 may contain a dry fabric perform 108 and be in fluid communication with conduits 110 and 112. Conduit 110 provides a means for facilitating the introduction of resin 102 into the mold cavity 62, whereas the conduit 112 provides a means for facilitating the evacuation of air from the mold cavity 62. That is, the conduit 112 may be used in conjunction with a vacuum pot 114, conduit 115, and vacuum pump 116 to draw a vacuum in the mold cavity 62. A gauge 118 is preferably provided on the conduit 112 so that a user can determine the pressure that is inside the mold cavity 62.

To allow excess pressure to be bled or dumped from one or more of the conduits 74, 106, 110, an/or the mold cavity 62, a bleed can 120 may be provided. A conduit 122 may be used to dump the pressure into the bleed can 120.

The system 100 further comprises a plurality of valves V1, V2, V3, V4, and V5 that allow for opening and closing of the various conduits 74, 106, 110, 112, and 122. By manipulating one or more of the valves V1 through V5, a user may control which of the various components of the system 100 are in fluid communication with each other. The valves V1 through V5 may be used in the manner shown in table 1, which is a table illustrating the various steps of an exemplary operational sequence of the system 100.

Table 1: various steps of an exemplary operational sequence of the system shown in Figure 5

| St | STEP | VALVE POSITION | | | | |
|---|---|---|---|---|---|---|
| | | V1 | V2 | V3 | V4 | V5 |
| 1 | Draw vaccuum within mold cavity 62 | closed | closed | closed | closed | open |
| 2 | Heat mold die 64 to injection temperature | closed | closed | closed | closed | open |
| 3 | Hook up shop air 104 | closed | closed | closed | closed | open |
| 4 | Inject resin 102 into mold cavity 62 | open | open | closed | closed | open |
| 5 | Close conduit 122 | open | open | closed | closed | closed |
| 6 | Build hydrostatic pressure within mold cavity 62 with pressure pot 60 | open | open | closed | closed | closed |
| | **TRANSFER CONTROL TO APPARATUS 10** | | | | | |

(continued)

| St | STEP | VALVE POSITION | | | | |
|---|---|---|---|---|---|---|
| | | V1 | V2 | V3 | V4 | V5 |
| 7 | Verify that piston assembly 34 of the apparatus 10 is in position 124 with depth gauge 76 | open | open | closed | closed | closed |
| 8 | Fill the resin chamber 46 with resin | open | closed | open | closed | closed |
| 9 | Hook up the air input 58 to the air inlet 54 | open | closed | open | closed | closed |
| 10 | Remove pressure pot 60 | closed | closed | open | closed | closed |
| 11 | Build pressure within air chamber 42 to 100PSI | closed | closed | open | closed | closed |
| 12 | Introduce apparatus 10 to the mold die 64 | closed | open | open | closed | closed |
| 13 | Monitor pressure with pressure gauge 72 and Monitor resin piston 40 position with the depth gauge 76 | closed | open | open | closed | closed |
| | **\*OVERPRESSURE EVENT** | | | | | |
| 14 | Reduce pressure on air regulator 58 | closed | closed | open | closed | closed |
| 15 | Relieve line pressure with bleed can 120 | closed | closed | open | closed | open |
| 16 | Close V5 and build pressure within apparatus 10 | closed | closed | open | closed | closed |
| 17 | Repeat steps 12 and 13 | closed | open | open | closed | closed |
| | **\*ADDITIONAL RESIN EVENT** | | | | | |
| 18 | Relieve air regulator 58 | closed | closed | closed | closed | closed |
| 19 | Relieve line pressure with bleed can 120 | closed | closed | open | closed | open |
| 20 | Fill the resin chamber 46 until the piston assembly is back in position 124 | open | closed | open | closed | closed |
| 21 | Repeat steps 10 through 13 | | | | | |
| \*If necessary | | | | | | |

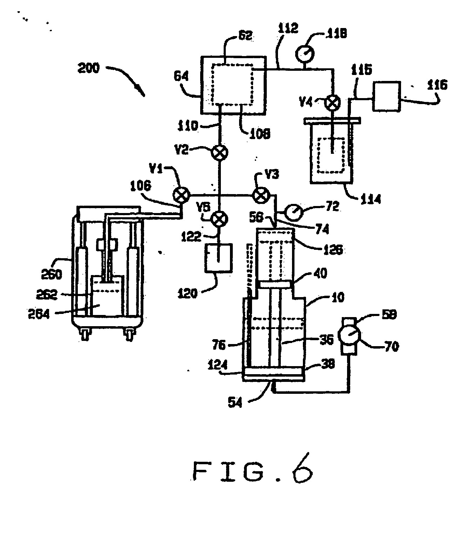

Figure 6 is a schematic diagram of a second embodiment of a liquid molding system 200 in which the liquid molding pressure control apparatus 10 may be used. The same reference numbers are used in Figures 5 and 7 for those components common to both the system 100 and the system 200.

Preferably, the system 200 includes a pail unloader or injector 260 instead of the pressure pot 60. The pail unloader 260 may include a pail or other container 262 that contains a starting material (e.g., one-part resin 264) therein.

To pump the resin 264 from the pail unloader 260 into the conduit 106 and ultimately to the mold cavity 62, a pump may be used. By way of example only, a hydraulic, mechanical, or pneumatic pump may be provided to pump the resin 264 from the pail 262 and into the conduit 106.

After the resin injection stage has been completed, the pressure within the mold cavity 62 is preferably maintained at least until the resin 264 crosslinks. By manipulating the various valves V1 through V5 and actuating the liquid molding pressure control apparatus 10, the liquid molding pressure control apparatus 10 can be used to maintain the pressure within the mold cavity 62. Thus, the pail unloader 260 can be removed from the system 200 and used elsewhere. The various steps of an exemplary operational sequence of the system 200 is shown in tabular format in Table 2.

Table 2: various steps of an exemplary operational sequence for the system shown in Figure 6

| St | STEP | VALVE POSITION | | | | |
|---|---|---|---|---|---|---|
| | | V1 | V2 | V3 | V4 | V5 |
| 1 | Draw vaccuum within mold cavity 62 | closed | closed | closed | closed | open |
| 2 | Heat mold die 64 to injection temperature | closed | closed | closed | closed | open |
| 3 | Inject resin 102 into mold cavity 62 | open | open | closed | closed | open |

(continued)

| St | STEP | VALVE POSITION | | | | |
|---|---|---|---|---|---|---|
| | | V1 | V2 | V3 | V4 | V5 |
| 4 | Close conduit 122 | open | open | closed | closed | closed |
| 5 | Build hydrostatic pressure within mold cavity 62 with injector 260 | open | open | closed | closed | closed |
| | **TRANSFER CONTROL TO APPARATUS 10** | | | | | |
| 6 | Verify that piston assembly 34 of the apparatus 10 is in position 124 with depth gauge 76 | open | open | closed | closed | closed |
| 7 | Fill the resin chamber 46 with resin | open | closed | open | closed | closed |
| 8 | Hook up the air input 58 to the air inlet 54 | open | closed | open | closed | closed |
| 9 | Close V1 to allow for removal of the pail unloader 260 | closed | closed | open | closed | closed |
| 10 | Build pressure within air chamber 42 to a pressure slightly higher than current pressure | closed | closed | open | closed | closed |
| 11 | Introduce apparatus 10 to the mold die 64 | closed | open | open | closed | closed |
| 12 | Monitor pressure with pressure gauge 72 and Monitor resin piston 40 position with the depth gauge 76 | closed | open | open | closed | closed |
| | ***OVERPRESSURE EVENT** | | | | | |
| 13 | Reduce pressure on air regulator 58 | closed | closed | open | closed | closed |
| 14 | Relieve line pressure with bleed can 120 | closed | closed | open | closed | open |
| 15 | Close V5 and build pressure within apparatus 10 | closed | closed | open | closed | closed |
| 16 | Repeat steps 11 and 12 | closed | open | open | closed | closed |
| | * **ADDITIONAL RESIN EVENT** | | | | | |
| 17 | Relieve air regulator 58 | closed | closed | closed | closed | closed |
| 18 | Relieve line pressure with bleed can 120 | closed | closed | open | closed | open |
| 19 | Fill the resin chamber 46 until the piston assembly is back in position 124 | open | closed | open | closed | closed |
| 20 | Repeat steps 9 through 12 | | | | | |
| *If necessary | | | | | | |

The present invention also provides a method for use during a liquid molding process. Preferably, the method comprises the steps of: using a liquid molding pressure control apparatus 10 having a housing 12 within which is disposed a first piston 38 and a second piston 40, to at least substantially maintain the pressure within a mold cavity 62; receiving a starting material (e.g., resin) within the housing 12 adjacent the second piston; receiving a pressurized fluid (e.g., pressurized air) within the housing 12 adjacent the first piston 38; and sizing the first and second pistons 38 and 40 such that the starting material exits the housing 12 at a pressure greater than a pressure of the pressurized fluid received within the housing 12.

Accordingly, the present invention provides a liquid molding pressure control device 10 that can be used during a RTM process to increase pressures within a mold cavity beyond that of a typical pressure pot or other air input. Alternatively, the liquid molding pressure control apparatus 10 may be used to maintain pressure within the mold cavity 62 after the resin transfer stage has been completed.

When used to increased the pressure within a mold cavity, the present invention eliminates, or at least reduces, porosity problems and improves dimensional characteristics and surface quality of RTM-processed parts. Accordingly, the present invention allows for the manufacture of high-quality products, which in turn should increase productivity by reducing the number of parts that might otherwise be rejected for porosity.

In addition, the present invention also allows for dramatic reductions in the amount of wear and tear that is typically placed on injectors during known RTM processes recognized in the art. Typically, an injector (e.g., a pail unloader) must remain engaged with a mold cavity to maintain the pressure within the mold cavity for at least a portion of the final curing stage. Because a significant amount of time is often needed for the resin to cure, a substantial amount of wear and tear is usually placed on the relatively expensive injector. By using the liquid molding pressure control apparatus 10 to substantially maintain the mold cavity pressure during the resin curing stage instead of the injector, the injector need not endure the wear and tear associated with maintaining mold cavity pressure during the resin curing stage.

Moreover, the present invention also allows for dramatic reductions in production cycle times of the injector per detail. Specifically, using the liquid molding pressure control apparatus 10 to maintain the mold cavity pressure during the resin curing stage instead of the injector allows the injector to be removed and thus available for additional injections elsewhere.

The present invention also allows for cost and capital expenditure reductions. For example, less resin is consumed per RTM injection when the liquid molding pressure control apparatus 10 is used to increase the pressure within the mold cavity. In addition, an RTM production facility can reduce the number of costly injector systems that would otherwise be needed to support production rate requirements when one or more liquid molding pressure control apparatus 10 are used to maintain mold cavity pressures.

The present invention may be used with any of wide range of starting materials (e.g., one-part resins, two-part resins, other multi-part resins, among other liquid moldable materials) and any of wide range of pressurized fluids (e.g., air, among others). The present invention may also be used in conjunction with a wide variety of injection or liquid molding processes (e.g., RTM processes, reaction injection molding (RIM) processes, among other manufacturing processes).

The description of the invention is merely exemplary in nature and is in no way intended to limit the invention, its application, or uses. Thus, variations that do not depart from the substance of the invention are intended to be within the scope of the invention. Such variations are not to be regarded as a departure from the ambit of the claims.

**Claims**

1. A liquid molding system (100, 200), comprising:

      - a mold defining a mold cavity;
      - a starting material supply apparatus; and
      - a liquid molding pressure control apparatus (10) for use during a liquid molding process, the liquid molding pressure control apparatus comprising:
      - a housing (12); and
      - a piston assembly (34) movably disposed within the housing, the piston assembly comprising:
      - a shaft (36);
      - a first piston (38) engaged with the shaft; and
      - a second piston (40) engaged with the shaft,
      - the housing being configured to receive a pressurized fluid adjacent the first piston and to receive a starting material adjacent the second piston,
      - the first and second piston being sized such that the starting material exits the housing at a pressure greater than a pressure of the pressurized fluid received within the housing, and
      - the liquid molding pressure control apparatus being usable to substantially maintain pressure within a mold cavity and to increase the pressure within the mold cavity, with a pressure pot (60) or injector (260) used for injecting the starting material into the mold cavity removably connected to the liquid molding pressure control apparatus by means of at least one valve.

2. The system of claim 1, wherein the starting material comprises a resin.

3. The system of claim 1, wherein the pressurized fluid comprises pressurized air.

4. The system of claim 1, further comprising a heating apparatus (20) for applying heat to the starting material within the housing.

5. The system of claim 1, further comprising:

      - at least one cap (22, 24) disposed at an end of the housing; and
      - at least one plug (26, 30) disposed within the housing adjacent the cap,

the plug and the cap defining an inlet into the housing.

6. The system of claim 5, wherein the plug defines at least one groove for receiving a fluidic sealing member (50, 52) therein.

7. The system of claim 1, wherein:

- the first piston defines at least one groove for receiving a fluidic sealing member (44) therein; and
- the second piston defines at least one groove for receiving a fluidic sealing member (48) therein.

8. The system of claim 1, further comprising a depth gauge (76) for indicating the positions of the first and second pistons within the housing.

9. The system of claim 1, wherein the ratio of the cross-sectional area of the first piston to the cross-sectional area of the second piston is about 4:1.

10. The system of claim 1, wherein the starting material supply apparatus comprises a pressure pot (60).

11. The system of claim 1, wherein the starting material supply apparatus comprises a pail unloader (260).

12. The system of any of claims 1-11, further comprising at least one valve for controlling the fluid communication between the liquid molding pressure control apparatus, the mold, and the starting material supply apparatus.

13. The system of any of claims 1-12, further comprising:

- a bleed can (120); and
- an apparatus for creating a vacuum in the mold cavity.

14. A method for use during a liquid molding process, the method comprising the steps of:

- using a liquid molding system according to any of claims 1-13, the liquid molding pressure control apparatus including a housing (12) within which is disposed a first piston (38) and a second piston (40), to at least substantially maintain the pressure within a mold cavity;
- receiving a starting material within the housing adjacent the second piston;
- receiving a pressurized fluid within the housing adjacent the first piston;
- sizing the first and second pistons such that the starting material exits the housing at a pressure greater than a pressure of the pressurized fluid received within the housing; and
- using the liquid molding pressure control apparatus to substantially maintain the mold cavity pressure during the resin curing stage.

15. The method of claim 14, wherein receiving a starting material within the housing adjacent the second piston comprises receiving a resin within the housing adjacent the second piston.

16. The method of claim 14 or 15, wherein receiving pressurized fluid within the housing adjacent the first piston comprises receiving pressurized air within the housing adjacent the first piston.

17. The method of claim 14, 15 or 16, further comprising the step of manipulating at least one valve to control fluid communication between the liquid molding pressure control apparatus and the mold cavity.

18. The method of any of claims 14-17, further comprising the step of using a pressure pot to provide the mold cavity and the housing with starting material.

19. The method of any of claims 14-17, further comprising the step of using a pail unloader to provide the mold cavity with starting material.

**EP 1 384 566 B1**

**Patentansprüche**

1. System (100, 200) zur Formgebung mit Flüssigkeit, umfassend:

   - ein Formwerkzeug, das einen Formwerkzeughohlraum begrenzt;
   - eine Vorrichtung zur Versorgung mit Ausgangsmaterial; und
   - eine Vorrichtung (10) zur Drucksteuerung bzw. -regelung bei Formgebung mit Flüssigkeit zwecks Verwendung während eines Prozesses zur Formgebung mit Flüssigkeit, wobei die Vorrichtung zur Drucksteuerung bzw. -regelung bei Formgebung mit Flüssigkeit umfasst:
   - ein Gehäuse (12); und
   - eine innerhalb des Gehäuses beweglich eingerichtete Kolbenanordnung (34), wobei die Kolbenanordnung umfasst:
   - einen Schaft (36);
   - einen ersten Kolben (38), der mit dem Schaft in Eingriff steht; und
   - einen zweiten Kolben (40), der mit dem Schaft in Eingriff steht,
   - wobei das Gehäuse ausgelegt ist, um ein Druckfluid neben dem ersten Kolben aufzunehmen und um ein Ausgangsmaterial neben dem zweiten Kolben aufzunehmen,
   - wobei der erste und der zweite Kolben so bemessen sind, dass das Ausgangsmaterial das Gehäuse bei einem Druck verlässt, der größer ist als ein Druck des im Innern des Gehäuses aufgenommenen Druckfluids, und
   - wobei die Vorrichtung zur Drucksteuerung bzw. -regelung bei Formgebung mit Flüssigkeit einsetzbar ist, um Druck innerhalb eines Formwerkzeughohlraums im Wesentlichen aufrechtzuerhalten und um den Druck innerhalb des Formwerkzeughohlraums zu erhöhen, mit einem Drucktopf (60) oder einer Einspritzvorrichtung (260) zum Einspritzen des Ausgangsmaterials in den Formwerkzeughohlraum, lösbar verbunden mit der Vorrichtung zur Drucksteuerung bzw. - regelung bei Formgebung mit Flüssigkeit mittels zumindest eines Ventils.

2. System nach Anspruch 1, wobei das Ausgangsmaterial ein Harz umfasst.

3. System nach Anspruch 1, wobei das Druckfluid Druckluft umfasst.

4. System nach Anspruch 1, weiterhin umfassend eine Heizvorrichtung (20) zum Beaufschlagen des Ausgangsmaterials innerhalb des Gehäuses mit Wärme.

5. System nach Anspruch 1, weiterhin umfassend:

   - zumindest eine Kappe (22, 24), die an einem Ende des Gehäuses angeordnet ist; und
   - zumindest einen Stöpsel (26, 30), der innerhalb des Gehäuses neben der Kappe angeordnet ist,

   wobei der Stöpsel und die Kappe einen Einlass in das Gehäuse begrenzen.

6. System nach Anspruch 5, wobei der Stöpsel zumindest eine Nut zum Aufnehmen eines Fluidabdichtungsteils (50, 52) in derselben begrenzt.

7. System nach Anspruch 1, wobei:

   - der erste Kolben zumindest eine Nut zum Aufnehmen eines Fluidabdichtungsteils (44) in derselben begrenzt; und
   - der zweite Kolben zumindest eine Nut zum Aufnehmen eines Fluidabdichtungsteils (48) in derselben begrenzt.

8. System nach Anspruch 1, weiterhin umfassend einen Tiefenmesser (76) zum Anzeigen der Positionen des ersten und des zweiten Kolbens innerhalb des Gehäuses.

9. System nach Anspruch 1, wobei das Verhältnis der Querschnittsfläche des ersten Kolbens zur Querschnittsfläche des zweiten Kolbens ungefähr 4:1 beträgt.

10. System nach Anspruch 1, wobei die Vorrichtung zur Versorgung mit Ausgangsmaterial einen Drucktopf (60) umfasst.

11. System nach Anspruch 1, wobei die Vorrichtung zur Versorgung mit Ausgangsmaterial einen Eimer- bzw. Kübelentlader (260) umfasst.

12. System nach einem der Ansprüche 1 - 11, weiterhin umfassend zumindest ein Ventil zum Steuern bzw. Regeln der fluiden Kommunikation zwischen der Vorrichtung zur Drucksteuerung bzw. -regelung bei Formgebung mit Flüssigkeit, dem Formwerkzeug und der Vorrichtung zur Versorgung mit Ausgangsmaterial.

13. System nach einem der Ansprüche 1 - 12, weiterhin umfassend:

   - eine Ablassdose (120); und
   - eine Vorrichtung zum Erzeugen eines Vakuums im Formwerkzeughohlraum.

14. Verfahren zur Anwendung während eines Prozesses zur Formgebung mit Flüssigkeit, wobei das Verfahren die Schritte umfasst:

   - Einsetzen eines Systems zur Formgebung mit Flüssigkeit nach einem der Ansprüche 1 - 13, wobei die Vorrichtung zur Drucksteuerung bzw. -regelung bei Formgebung mit Flüssigkeit ein Gehäuse (12) beinhaltet, innerhalb dessen ein erster Kolben (38) und ein zweiter Kolben (40) angeordnet sind, um den Druck innerhalb eines Formwerkzeughohlraums zumindest im Wesentlichen aufrechtzuerhalten;
   - Aufnehmen eines Ausgangsmaterials im Innern des Gehäuses neben dem zweiten Kolben;
   - Aufnehmen eines Druckfluids im Innern des Gehäuses neben dem ersten Kolben;
   - Bemessen des ersten und des zweiten Kolbens so, dass das Ausgangsmaterial das Gehäuse bei einem Druck verlässt, der größer ist als ein Druck des im Innern des Gehäuses aufgenommenen Druckfluids; und
   - Verwenden der Vorrichtung zur Drucksteuerung bzw. - regelung bei Formgebung mit Flüssigkeit, um den Formwerkzeughohlraumdruck während des Stadiums der Harzaushärtung im Wesentlichen aufrechtzuerhalten.

15. Verfahren nach Anspruch 14, wobei das Aufnehmen eines Ausgangsmaterials im Innern des Gehäuses neben dem zweiten Kolben das Aufnehmen eines Harzes im Innern des Gehäuses neben dem zweiten Kolben umfasst.

16. Verfahren nach Anspruch 14 oder 15, wobei das Aufnehmen von Druckfluid im Innern des Gehäuses neben dem ersten Kolben das Aufnehmen von Druckluft im Innern des Gehäuses neben dem ersten Kolben umfasst.

17. Verfahren nach Anspruch 14, 15 oder 16, weiterhin umfassend den Schritt des Betätigens zumindest eines Ventils, um fluide Kommunikation zwischen der Vorrichtung zur Drucksteuerung bzw. -regelung bei Formgebung mit Flüssigkeit und dem Formwerkzeughohlraum zu steuern bzw. regeln.

18. Verfahren nach einem der Ansprüche 14 - 17, weiterhin umfassend den Schritt des Verwendens eines Drucktopfes, um den Formwerkzeughohlraum und das Gehäuse mit Ausgangsmaterial zu versehen.

19. Verfahren nach einem der Ansprüche 14 - 17, weiterhin umfassend den Schritt des Verwendens eines Eimer- bzw. Kübelentladers, um den Formwerkzeughohlraum mit Ausgangsmaterial zu versehen.

**Revendications**

1. Système de moulage de matériau liquide (100, 200), comprenant :

   - un moule délimitant une cavité de moulage ;
   - un appareil d'apport de matière première ; et
   - un appareil de régulation de pression de moulage de matériau liquide (10) destiné à être utilisé durant un processus de moulage de matériau liquide, l'appareil de régulation de pression de moulage de matériau liquide comprenant :

      - un logement (12) ; et
      - un ensemble formant piston (34) disposé mobile à l'intérieur du logement, l'ensemble formant piston comprenant :

         - une tige (36) ;
         - un premier piston (38) s'emboîtant avec la tige ; et
         - un second piston (40) s'emboîtant avec la tige,
         - le logement étant configuré pour recevoir un fluide sous pression du côté du premier piston et pour recevoir une matière première du côté du second piston,
- les premier et second pistons étant dimensionnés de sorte que la matière première sorte du logement à une pression supérieure à la pression du fluide sous pression reçu à l'intérieur du logement, et
- l'appareil de régulation de pression de moulage de matériau liquide pouvant servir à maintenir de manière sensible la pression à l'intérieur d'une cavité de moulage et à élever la pression au sein de la cavité de moulage, une cuve de pression (60) ou un injecteur (260) étant utilisé pour injecter la matière première dans la cavité de moulage raccordée de façon séparable à l'appareil de régulation de pression de moulage de matériau liquide au moyen d'au moins une vanne.

2.  Système selon la revendication 1, dans lequel la matière première comprend une résine.

3.  Système selon la revendication 1, dans lequel le fluide sous pression comprend de l'air pressurisé.

4.  Système selon la revendication 1, comprenant en outre un appareil de chauffage (20) destiné à appliquer de la chaleur à la matière première présente dans le logement.

5.  Système selon la revendication 1, comprenant en outre :

    - au moins un capuchon (22, 24) disposé à une extrémité du logement ; et
    - au moins un bouchon (26, 30) disposé à l'intérieur du logement à proximité du capuchon,

    le bouchon et le capuchon délimitant une entrée dans le logement.

6.  Système selon la revendication 5, dans lequel le bouchon délimite au moins une rainure destinée à recevoir un élément d'étanchéité aux fluides (50, 52).

7.  Système selon la revendication 1, dans lequel :

    - le premier piston délimite au moins une rainure destinée à recevoir un élément d'étanchéité aux fluides (44) ; et
    - le second piston délimite au moins une rainure destinée à recevoir un élément d'étanchéité aux fluides (48).

8.  Système selon la revendication 1, comprenant en outre une jauge de profondeur (76) permettant d'indiquer la position des premier et second pistons à l'intérieur du logement.

9.  Système selon la revendication 1, dans lequel le rapport de la section transversale du premier piston à la section transversale du second piston est d'environ 4:1.

10. Système selon la revendication 1, dans lequel l'appareil d'apport de matière première comprend une cuve de pression (60).

11. Système selon la revendication 1, dans lequel l'appareil d'apport de matière première comprend une déchargeuse à seau (260) (pail unioader).

12. Système selon l'une quelconque des revendications 1 à 11, comprenant en outre au moins une vanne de régulation de la communication fluidique entre l'appareil de régulation de la pression de moulage de matériau liquide, le moule et l'appareil d'apport de matière première.

13. Système selon l'une quelconque des revendications 1 à 12, comprenant en outre :

    - un récipient de purge (120) ; et
    - un appareil de production d'un vide dans la cavité de moulage.

14. Procédé destiné à être utilisé durant un processus de moulage de matériau liquide, le procédé comprenant les étapes consistant à :

    - utiliser un système de moulage de matériau liquide selon l'une quelconque des revendications 1 à 13, l'appareil de régulation de pression de moulage de matériau liquide comportant un logement (12) dans lequel sont disposés un premier piston (38) et un second piston (40), destinés au moins à maintenir de manière sensible la pression à l'intérieur d'une cavité de moulage ;
- recevoir une matière première à l'intérieur du logement du côté du second piston ;
- recevoir un fluide sous pression à l'intérieur du logement du côté du premier piston ;
- dimensionner les premier et second pistons de sorte que la matière première sorte du logement à une pression supérieure à la pression du fluide sous pression reçue à l'intérieur du logement ; et
- utiliser l'appareil de régulation de pression de moulage de matériau liquide de manière à maintenir de manière sensible la pression de la cavité de moulage durant le stade de cuisson de la résine.

15. Procédé selon la revendication 14, dans lequel la réception d'une matière première à l'intérieur du logement du côté du second piston comprend la réception d'une résine à l'intérieur du logement du côté du second piston.

16. Procédé selon la revendication 14 ou 15, dans lequel la réception d'un fluide sous pression à l'intérieur du logement du côté du premier piston comprend la réception d'air pressurisé à l'intérieur du logement du côté du premier piston.

17. Procédé selon la revendication 14, 15 ou 16, comprenant en outre l'étape consistant à manipuler au moins une vanne pour réguler la communication fluidique entre l'appareil de régulation de pression de moulage de matériau liquide et la cavité de moulage.

18. Procédé selon l'une quelconque des revendications 14 à 17, comprenant en outre l'étape consistant à utiliser une cuve de pression pour apporter la matière première à la cavité de moulage et au logement.

19. Procédé selon l'une quelconque des revendications 14 à 17, comprenant en outre l'étape consistant à utiliser une déchargeuse à seau (pail unloader) pour apporter la matière première à la cavité de moulage.

FIG.1

FIG.2

FIG.3

FIG.5

Pp    Fp    Fr    Pr

Ap

Ar

FIG. 4

FIG.6

**EP 1 384 566 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5786999 A
- US 5316707 A
- US 5518385 A
- FR 2750071 A